# EUROPEAN PATENT SPECIFICATION

(11) **EP 2 756 039 B1**
(45) Date of publication and mention of the grant of the patent: **28.06.2017**
(21) Application number: 12762161.3
(22) Date of filing: 11.09.2012
(51) Int. Cl.: C08L 81/02, C08K 3/04, C08K 7/24

(54) **CONDUCTIVE SEALANT COMPOSITIONS**
LEITFÄHIGE DICHTUNGSZUSAMMENSETZUNGEN
COMPOSITIONS DE MATÉRIAU CONDUCTEUR D'ÉTANCHÉITÉ

(30) Priority: 16.09.2011 US 201161535927 P; 10.09.2012 US 201213608220
(43) Date of publication of application: 23.07.2014
(73) Proprietor: PRC-Desoto International, Inc., Sylmar, California 91342 (US)
(72) Inventor: SHARABY, Ahmed, Acton, California 93510 (US); TAN, Ponchivy, Santa Clarita, California 91387 (US)
(74) Representative: f & e patent
(86) International application number: PCT/US2012/054624
(87) International publication number: WO 2013/039890

(56) References cited:
- US-A1- 2004 220 327
- US-A1- 2009 057 624
- US-A1- 2010 221 064
- US-A1- 2011 147 640
- DATABASE WPI Week 200548 Thomson Scientific, London, GB; AN 2005-479074 XP002686119, -& WO 2005/056685 A1 (BRIDGESTONE CORP) 23 June 2005 (2005-06-23)

## Description

### TECHNICAL FIELD

The present disclosure relates to sealant compositions exhibiting enhanced conductivity, tensile elongation, and specific gravity, and that are useful in lightning strike applications.

### BACKGROUND

During flight, aircraft face a number of environmental occurrences that can cause dangerous conditions or even physical damage. For example, lightning strikes and electromagnetic interference (EMI) are fairly common environmental occurrences that may lead to dangerous conditions during aircraft flight. Lightning strikes may cause physical damage to the aircraft by puncturing holes through parts of the aircraft, or may cause a dangerous surge current which may contact the fuel reservoir and result in an explosion. EMI may cause excessive energy levels in the wiring and probes of the aircraft's fuel system. Given the potential for severe damage or electrical interference caused by these environmental occurrences, means for preventing or mitigating the adverse effects of lightning strikes and EMI are important in aircraft design and manufacture.

### SUMMARY

In embodiments of the present invention, a sealant composition includes a base composition including a sulfur-containing polymer, a curing agent composition including a curing agent, and an electrically conductive filler in at least one of the base composition or the curing agent composition. The electrically conductive filler includes carbon nanotubes and conductive carbon black. The conductive carbon black may be Ketjenblack or Black Pearls® carbon. In some embodiments, the sealant composition is substantially nickel free.

The conductive carbon black may have an average particle diameter larger than the average particle diameter of the carbon nanotubes, or the carbon nanotubes may have an average particle diameter larger than an average particle diameter of the conductive carbon black. In some embodiments, for example, the carbon nanotubes may have a length dimension of 5 µm to 30 µm, and a diameter dimension of 10 nm to 30 nm, and the conductive carbon black may have an average particle size of 10 µm to 40 µm. Additionally, a volume ratio of the carbon nanotubes to the conductive carbon black may be 1:5 to 1:10.

The sealant composition may further include at least one of an adhesion promoter, a corrosion inhibitor or a plasticizer in at least one of the base composition or the curing agent composition.

The sulfur-containing polymer in the base composition may be a polysulfide or a polythioether.

In some embodiments, a sealant composition includes a substantially nickel-free base composition including a sulfur-containing polymer, a substantially nickel-free curing agent composition including a curing agent, and a substantially nickel-free electrically conductive filler in at least one of the base composition or the curing agent composition. The electrically conductive filler includes carbon nanotubes and conductive carbon black. The conductive carbon black may be Ketjenblack or Black Pearls® carbon. The conductive carbon black may have an average particle diameter larger than the average particle diameter of the carbon nanotubes, or the carbon nanotubes may have an average particle diameter larger than the average particle diameter of the conductive carbon black. In some embodiments, for example, the carbon nanotubes may have a length dimension of 5 µm to 30 µm, and a diameter dimension of 10 nm to 30 nm, and the conductive carbon black may have an average particle size of 10 µm to 40 µm. Additionally, a volume ratio of the carbon nanotubes to the conductive carbon black may be 1:5 to 1:10.

The sealant compositions according to the present invention are substantially Ni-free, are particularly useful in lightning strike applications, and exhibit unexpectedly superior tensile elongation and low specific gravity.

### DETAILED DESCRIPTION

In certain embodiments of the present disclosure, a sealant composition comprises at least one sulfur-containing polymer, and an electrically conductive filler comprising carbon nanotubes and conductive carbon black. The term "sealant," "sealing," or "seal" as used herein refers to compositions that have the ability to resist atmospheric conditions such as moisture and temperature and at least partially block the transmission of materials such as water, fuel, and other liquids and gasses. Sealants often have adhesive properties, but are not simply adhesives that do not have the blocking properties of a sealant.

Sealant compositions of the present disclosure can be prepared by blending an electrically conductive base composition, and a curing agent composition. A base composition and a curing agent composition can be prepared separately, and then blended to form a sealant composition. A conductive base composition can comprise, for example, at least one sulfur-containing polymer, at least one plasticizer, at least one adhesion promoter, at least one corrosion inhibitor, at least one electrically non-conductive filler, and an electrically conductive filler comprising carbon nanotubes and conductive carbon black. However, it is understood that the base compositions need not contain each of these components. For example, many of these components are optional, for example, the plasticizer, adhesion promoter, corrosion inhibitor, electrically non-conductive filler, and electrically conductive filler. Accordingly, the base composition, in some embodiments, may contain only the polymer (which may be either or both a polysulfide and/or a polythioether), and a solvent. However, as discussed below, at least one of the base composition and/or curing agent composition includes a conductive filler comprising carbon nanotubes and conductive carbon black.

A curing agent composition can comprise, for example, at least one curing agent, at least one plasticizer, at least one electrically non-conductive filler, and at least one cure accelerator. However, like the base composition, the curing agent composition need not contain each of these components. Indeed, many of these components are optional, for example, the plasticizer, electrically non-conductive filler and cure accelerator. Accordingly, the curing agent composition, in some embodiments, may contain only the curing agent. However, as discussed below, at least one of the base composition and/or curing agent composition includes a conductive filler comprising carbon nanotubes and conductive carbon black.

In certain embodiments, 5 to 20 parts by weight of a curing agent composition are blended with 100 parts by weight of a base composition, and in certain embodiments, 8 to 16 parts by weight of curing agent composition are blended with 100 parts by weight of a base composition to form an electrically conductive sealant composition.

In certain embodiments, two-component curable compositions are preferred over one-component curable compositions because the two-component compositions provide the best rheology for application and exhibit desirable physical and chemical properties in the resultant cured composition. As used herein, the two components are referred to as the base composition, and the curing agent composition. In certain embodiments, the base composition can comprise polysulfide polymers, polythioether polymers, oxidizing agents, additives, fillers, plasticizers, organic solvents, adhesion promoters, corrosion inhibitors, and combinations thereof. However, it is understood that the base compositions need not contain each of these components. For example, many of these components are optional, for example, the oxidizing agents, additives, fillers, plasticizers, adhesion promoters, and corrosion inhibitors. Accordingly, the base composition, in some embodiments, may contain only the polymer (which may be either or both a polysulfide and/or a polythioether), and a solvent. However, as discussed below, at least one of the base composition and/or curing agent composition includes a conductive filler comprising carbon nanotubes and conductive carbon black.

In certain embodiments, the curing agent composition can comprise curing agents, cure accelerators, cure retardants, plasticizers, additives, fillers, and combinations thereof. However, like the base composition, the curing agent composition need not contain each of these components. Indeed, many of these components are optional, for example, the cure accelerators, cure retardants, plasticizers, additives, and fillers. Accordingly, in some embodiments, the curing agent composition may contain only the curing agent. However, as discussed below, at least one of the base composition and/or curing agent composition includes a conductive filler comprising carbon nanotubes and conductive carbon black.

At least one of the base composition and the curing composition includes a conductive filler comprising carbon nanotubes and conductive carbon black. In some exemplary embodiments, the conductive carbon black includes Black Pearls@ carbon or Ketjenblack. The conductive filler may further include any additional conductive filler conventionally used in sealant compositions. However, in some embodiments, the optional additional conductive filler is substantially Ni-free in order to reduce toxicity and adverse environmental concerns. In some embodiments, for example, the conductive filler includes graphite in addition to the carbon nanotubes and conductive carbon black. As used herein, the term "substantially" is used as a term of approximation, and not as a term of degree. Additionally, the term "substantially nickel-free" is used as a term of approximation to denote that the amount of the nickel in the conductive filler or sealant composition is negligible, such that if nickel is present in the additional conductive filler or sealant composition at all, it is as an incidental impurity.

In certain embodiments, sulfur-containing polymers useful in the practice of the present disclosure include polysulfide polymers that contain multiple sulfide groups, i.e., -S-, in the polymer backbone and/or in the terminal or pendent positions on the polymer chain. Such polymers are described in U.S. Pat. No. 2,466,963 wherein the disclosed polymers have multiple -S-S- linkages in the polymer backbone, the entire content of which is incorporated herein by reference. Other useful polysulfide polymers are those in which the polysulfide linkage is replaced with a polythioether linkage, i.e., -[-CH₂-CH₂-S-CH₂-CH₂-]ₙ- where n can be an integer ranging from 8 to 200 as described in U.S. Pat. No. 4,366,307. In some embodiments, for example, the polythioether polymers may be those described in U.S. Patent No. 6,172,179. For example, the polythioether polymer may be the polythioether prepared in Example 1 of U.S. Patent No. 6,172,179. The polysulfide polymers can be terminated with non-reactive groups such as alkyl, although in certain embodiments, the polysulfide polymers contain reactive groups in the terminal or pendent positions. Typical reactive groups are thiol, hydroxyl, amino, and vinyl. Such polysulfide polymers are described in the aforementioned U.S. Pat. No. 2,466,963, U.S. Pat. No. 4,366,307, and U.S. Pat. No. 6,372, 849. Such polysulfide polymers can be cured with curing agents that are reactive with the reactive groups of the polysulfide polymer.

Sulfur-containing polymers of the present disclosure can have number average molecular weights ranging from 500 to 8,000 grams per mole, and in certain embodiments, from 1,000 to 5,000 grams per mole, as determined by gel permeation chromatography using a polystyrene standard. For sulfur-containing polymers that contain reactive functional groups, the sulfur-containing polymers can have average functionalities ranging from 2.05 to 3.0, and in certain embodiments ranging from 2.1 to 2.6. A specific average functionality can be achieved by suitable selection of reactive components. Nonlimiting examples of sulfur-containing polymers include those available from PRC-DeSoto International, Inc. under the trademark PERMAPOL, specifically, PERMAPOL P-3.1 or PERMAPOL P-3, and from Akros Chemicals, such as THIOPLAST G4.

A sulfur-containing polymer can be present in the base composition in an amount ranging from 10% to 80% by weight of the total weight of the base composition, and in certain embodiments can range from 10% to 40%, and in other embodiments can range from 20% to 30% by weight. In certain embodiments, the sulfur-containing polymer comprises a combination of a polysulfide polymer and a polythioether polymer, and the amounts of polysulfide polymer and polythioether polymer can be similar. For example, in some embodiments, the amount of polysulfide polymer and the amount of polythioether polymer in a base composition can each range from about 10% by weight to about 15% by weight of the total weight of the base composition.

The sealant compositions of the present disclosure comprise at least one curing agent for curing the at least one sulfur-containing polymer. The term "curing agent" refers to any material that can be added to a sulfur-containing polymer to accelerate the curing or gelling of the sulfur-containing polymer. Curing agents are also known as accelerators, catalysts or cure pastes. In certain embodiments, the curing agent is reactive at a temperature ranging from 10°C to 80°C. The term "reactive" means capable of chemical reaction and includes any level of reaction from partial to complete reaction of a reactant. In certain embodiments, a curing agent is reactive when it provides for cross-linking or gelling of a sulfur-containing polymer.

In certain embodiments, the sealant compositions comprise at least one curing agent that contains oxidizing agents capable of oxidizing terminal mercaptan groups of the sulfur-containing polymer to form disulfide bonds. Useful oxidizing agents include, for example, lead dioxide, manganese dioxide, calcium dioxide, sodium perborate monohydrate, calcium peroxide, zinc peroxide, and dichromate. The amount of curing agent in a curing agent composition can range from 25% by weight to 75% by weight of the total weight of the curing agent composition. Additives such as sodium stearate can also be included to improve the stability of the accelerator. For example, a curing agent composition can comprise an amount of cure accelerator ranging from 0.1% to 1.5% by weight based on the total weight of the curing agent composition.

In certain embodiments, sealant compositions of the present disclosure can comprise at least one curing agent containing at least one reactive functional group that is reactive with functional groups attached to the sulfur-containing polymer. Useful curing agents containing at least one reactive functional group that is reactive with functional groups attached to the sulfur-containing polymer include polythiols, such as polythioethers, for curing vinyl-terminated polymers; polyisocyanates such as isophorone diisocyanate, hexamethylene diisocyanate, and mixtures and isocyanurate derivatives thereof for curing thiol-, hydroxyl- and amino-terminated polymers; and, polyepoxides for curing amine- and thiol-terminated polymers. Nonlimiting examples of polyepoxides include hydantoin diepoxide, Bisphenol-A epoxides,. Bisphenol-F epoxides, Novolac-type epoxides, aliphatic polyepoxides, and epoxidized unsaturated resins, and phenolic resins. The term "polyepoxide" refers to a material having a 1,2-epoxy equivalent greater than one and includes monomers, oligomers, and polymers.

The sealant composition can optionally comprise at least one compound to modify the rate of cure. For example, cure accelerants such as dipentamethylene/thiuram/polysulfide mixture can be included in the sealant composition to accelerate the rate of cure, and/or at least one cure retardant such as stearic acid can be added to retard the rate of cure and thereby extend the work life of a sealant composition during application. In certain embodiments, the curing agent composition can comprise an amount of accelerant ranging from 1% to about 7% by weight, and/or an amount of cure retardant ranging from 0.1% to 1% by weight, based on the total weight of the curing agent composition. To control the cure properties of the sealant composition, it can also be useful to include at least one material capable of at least partially removing moisture from the sealant composition such as a molecular sieve powder. In certain embodiments, a curing agent composition can comprise an amount of material capable of at least partially removing moisture ranging from 0.1% to 1.5% by weight, based on the total weight of the curing agent composition.

In certain embodiments, sealant compositions of the present disclosure can comprise fillers. As used herein, "filler" refers to a non-reactive component in the composition that provides a desired property, such as, for example, electrical conductivity, density, viscosity, mechanical strength, EMI/RFI shielding effectiveness, lightning strike applicability, tensile elongation, specific gravity and the like.

Examples of electrically non-conductive fillers include materials such as, but not limited to, calcium carbonate, mica, polyamide, fumed silica, molecular sieve powder, microspheres, titanium dioxide, chalks, alkaline blacks, cellulose, zinc sulfide, heavy spar, alkaline earth oxides, alkaline earth hydroxides, and the like. Exemplary fillers may also include high band gap materials such as zinc sulfide and inorganic barium compounds. In certain embodiments, the base composition can comprise an amount of electrically non-conductive filler ranging from 2% to 10% by weight, based on the total weight of the base composition, and in certain embodiments, can range from 3% to 7% by weight. In certain embodiments, a curing agent composition can comprise an amount of electrically non-conductive filler ranging from less than 6 percent by weight, and in certain embodiments ranging from 0.5% to 4% by weight, based on the total weight of the curing agent composition.

According to embodiments of the present disclosure, either or both of the base composition and/or the curing agent composition includes a conductive filler comprising carbon nanotubes and conductive carbon black (e.g., Black Pearls@ carbon or Ketjenblack). In some embodiments, for example, the sealant composition includes 80% to 90% base composition and 10% to 20% curing agent composition, and the conductive filler including the carbon nanotubes and conductive carbon black are included in the base composition. These fillers are used to impart electrical conductivity to the sealant compositions while maintaining applicability of the sealant in the lightning strike applications. The combination of the carbon nanotubes and conductive carbon black (e.g., Black Pearls® carbon or Ketjenblack) forms an interactive conductive matrix which imparts unexpectedly superior electrical conductivity, tensile elongation and lower specific gravity. In addition, this combination of carbon nanotubes and conductive carbon eliminates Ni, which has typically been used in conductive fillers in conventional sealant compositions. Indeed, according to embodiments of the present invention, the conductive filler, as well as the sealant composition, are substantially Ni-free, thereby substantially eliminating the toxicity and environmental downsides attributed to the inclusion of Ni in conventional sealant compositions. As discussed above, as used herein, the term "substantially" is used as a term of approximation, and not as a term of degree. Additionally, as discussed above, the term "substantially nickel-free" is used as a term of approximation to denote that the amount of the nickel in the sealant compositions is negligible, such that if nickel is present at all, it is as an incidental impurity.

The size of the carbon nanotubes and conductive carbon black (e.g., Black Pearls® or Ketjenblack) can vary as desired to adjust or modify the electrical conductivity and/or other properties of the sealant composition. However, in certain embodiments, one of the carbon nanotubes or the conductive carbon black particles has an average particle (i.e., nanotube or particle) dimension that is larger than an average particle (i.e., nanotube or particle) dimension of the other of the carbon nanotubes or conductive carbon black. For example, in some embodiments, the carbon nanotubes may have a length dimension ranging from 5 to 30µm, and a diameter dimension ranging from 10 to 30nm. The conductive carbon black particles may have an average particle size ranging from 10 to 40µm. Also, a volume ratio of the carbon nanotubes to the conductive carbon black may range from 1:5 to 1:10. In one embodiment, for example, the volume ratio of the carbon nanotubes to the conductive carbon black is 1:5.

The sealant compositions may also optionally include one or more corrosion inhibitors Nonlimiting examples of suitable corrosion inhibitors include strontium chromate, calcium chromate, magnesium chromate, and combinations thereof. U.S. Pat. No. 5,284,888 and U.S. Pat. No. 5,270,364, disclose the use of aromatic triazoles to inhibit corrosion of aluminum and steel surfaces. In certain embodiments, a sacrificial oxygen scavenger such as Zn can be used as a corrosion inhibitor. In certain embodiments, the corrosion inhibitor can comprise less than 10% by weight of the total weight of the sealant composition. In certain embodiments, the corrosion inhibitor can comprise an amount ranging from 2% by weight to 8% by weight of the total weight of the sealant composition.

In certain embodiments, the sealant compositions may optionally further comprise one or more plasticizers, nonlimiting examples of which include phthalate esters, chlorinated paraffins, hydrogenated terphenyls, partially hydrogenated terphenyls, and the like. The plasticizer may be included in either or both of the base composition and/or the curing agent composition. In some embodiments, the plasticizer is included in the base composition in an amount ranging from 0.1% to 5% by weight based on the total weight of the base composition, and in certain embodiments, can range from 0.5% to 3% by weight. In some embodiments, the plasticizer is included in the curing agent composition in an amount ranging from 20% to 60% by weight of the total weight of the curing agent composition, and in certain embodiments, can range from 30% to 40% by weight.

In certain embodiments, the sealant compositions may optionally further comprise an organic solvent, such as a ketone or an alcohol, for example methyl ethyl ketone, and isopropyl alcohol, or a combination thereof.

In certain embodiments, the sealant compositions may optionally further comprise one or more adhesion promoters, nonlimiting examples of which include phenolic resins, silane adhesion promoters, and combinations thereof. Adhesion promoters help facilitate adhesion of the polymeric components of the sealant composition to a substrate, as well as to the electrically non-conductive and electrically conductive fillers in the sealant composition. The adhesion promoter may be included in either or both of the base composition and/or the curing agent composition. In certain embodiments, the adhesion promoter is included in the base composition in an amount ranging from 0.10% to 3.0% by weight (for phenolic adhesion promoters), from 0.05% to 2.0% by weight (for mercapto-silane adhesion promoters), or from 0.05% to 2.0% by weight (for epoxy-silane adhesion promoters). The total amount of adhesion promoter in the base composition can range from 0.5% to 7% by weight, based on the total weight of the base composition.

In certain embodiments, the base composition can be prepared by batch mixing at least one sulfur-containing polymer, additives, and/or fillers in a double planetary mixer under vacuum. Other suitable mixing equipment includes a kneader extruder, sigma mixer, or double "A" arm mixer. For example, a base composition can be prepared by mixing at least one sulfur-containing polymer, plasticizer, and phenolic adhesion promoter. After the mixture is thoroughly blended, additional constituents can be separately added and mixed using a high shear grinding blade, such as a Cowless blade, until cut in. Examples of additional constituents that can be added to the base composition include the carbon nanotube/conductive carbon black conductive filler, corrosion inhibitors, non-conductive fillers, and silane adhesion promoters. The mixture can then be mixed for an additional 15 to 20 minutes under a vacuum of 27 inches of mercury or greater to reduce or remove entrapped air and/or gases. The base composition can then be extruded from the mixer using a highpressure piston ram.

The curing agent composition can be prepared by batch mixing a curing agent, additives, and fillers. In certain embodiments, 75% of the total plasticizer (such as partially hydrogenated terphenyl) and an accelerant (such as a dipentamethylene/thiuram/polysulfide mixture) are mixed in a single-shaft anchor mixer. Molecular sieve powder is then added and mixed for 2 to 3 minutes. Fifty percent of the total manganese dioxide is then mixed until cut in. Stearic acid, sodium stearate, and the remaining plasticizer are then mixed until cut in followed by the remaining 50% of the manganese dioxide which is mixed until cut in. Fumed silica is then mixed until cut in. If the mixture is too thick a surfactant may be added to increase wetting. The curing agent composition is then mixed for 2 to 3 minutes, passed over a three-roll paint mill to achieve a grind, and returned to the single-shaft anchor mixer and mixed for an additional 5 to 10 minutes. The curing agent composition can then be removed from the mixer with a piston ram and placed into storage containers and aged for at least 5 days prior to combining with a base composition. The base composition and curing agent composition are mixed together to form the sealant composition, which can then be applied to a substrate.

It is noted that, as used in this disclosure, the singular forms "a," "an," and, "the" include plural referents unless expressly and unequivocally limited to one referent. Thus, for example, reference to "a filler" includes one or more fillers. Also it is noted that, as used herein, the term "polymer" refers to polymers, oligomers, homopolymers, and copolymers.

Embodiments of the present disclosure can be further defined by reference to the following example, which describes in detail the preparation of an exemplary composition of the present disclosure.

Example: The components of the base composition are indicated in the below table. Specifically, the base composition included 60.75 lbs (27.56 kg) of a carbon nanotube (CNT) dispersion (i.e., 1% carbon nanotubes dispersed in a polythioether polymer (Permapol P3.1e, available from PRC-DeSoto)), 0.21 lbs (0.095 kg) phenol adhesion promoter, 3.59 lbs (1.63 kg) polysulfide with phenol adhesion promoter, 1.54 lbs (0.70 kg) silane adhesion promoter, 8.65 lbs (3.92 kg) conductive graphite, 7.60 lbs (3.45 kg) conductive carbon black, and 17.65 lbs (8.00 kg) solvent.

| | **Material** | **Amount (lbs)** |
|---|---|---|
| 1% CNT in P3.1e | CNT/Polymer | 60.75 |
| phenol | adhesion promoter | 0.21 |
| polysulfide with phenol | adhesion promoter | 3.59 |
| silane | adhesion promoter | 1.54 |
| Asbury Graphite | conductive graphite | 8.65 |
| conductive carbon black | conductive carbon black | 7.60 |
| ethyl acetate | solvent | 17.65 |

To the 1% carbon nanotubes dispersed in a polythioether polymer, the adhesion promoters are added and mixed in a Hauschild Speed Mixer. The Asbury graphite is added and mixed in the Speed Mixer, and then the ethyl acetate and conductive carbon black are added and mixed in the Speed Mixer.

The compositions were cured using a manganese based curing agent composition to effect oxidative curing. For example, the curing agent composition may include a manganese oxide based composition including a plasticizer and/or a cure rate modifier (e.g., a cure accelerant or a cure retardant). One example of a suitable curing agent composition is a composition including 25% to 75% manganese dioxide.

The carbon nanotubes dispersed in the polymer significantly increases the ability to achieve the desired conductivity and electrical resistance. The following Table 1 lists the electrical resistance for the examples prepared as above, but with differing amounts of the pre-dispersed carbon nanotubes in the polymer.

**Table 1**

| | P3.1e only | 0.25% CNT | 0.50% CNT | 0.75% CNT | 1% CNT | 1% Ketjenblack EC600JD |
|---|---|---|---|---|---|---|
| Electrical Reistance (Ohms) | 25-59 | 14-16 | 7-13 | 12-16 | 9-13 | 17-20 |

Although the coating compositions are described as being useful for aerospace applications, they may be useful for other applications as well.

## Claims

1. A sealant composition, comprising:
a base composition comprising a sulfur-containing polymer;
a curing agent composition comprising a curing agent; and
an electrically conductive filler in at least one of the base composition or the curing agent composition, the electrically conductive filler comprising carbon nanotubes and conductive carbon black.

2. The sealant composition of claim 1, wherein the electrically conductive filler is in the base composition.

3. The sealant composition of claim 1, wherein the electrically conductive filler is in the curing agent composition.

4. The sealant composition of claim 1, wherein the electrically conductive filler is both the curing agent composition and the base composition.

5. The sealant composition of claim 1, wherein the sealant composition is substantially nickel free.

6. The sealant composition of any of claims 1 or 5, wherein the conductive carbon black has an average particle diameter larger than an average particle diameter of the carbon nanotubes.

7. The sealant composition of any of claims 1 or 5, wherein the carbon nanotubes have an average particle diameter larger than an average particle diameter of the conductive carbon black.

8. The sealant composition of any of claims 1 or 5, wherein the carbon nanotubes have a length dimension of 5 µm to 30 µm, and a diameter dimension of 10 nm to 30 nm.

9. The sealant composition of any of claims 1 or 5, wherein the conductive carbon black has an average particle size of 10 µm to 40 µm.

10. The sealant composition of any of claims 1 or 5, wherein a volume ratio of the carbon nanotubes to the conductive carbon black is 1:5 to 1:10.

11. The sealant composition of claim 1, further comprising at least one of an adhesion promoter, a corrosion inhibitor or a plasticizer in at least one of the base composition or the curing agent composition.

12. The sealant composition of claim 1, wherein the sulfur-containing polymer is a polysulfide or a polythioether.

## Patentansprüche

1. Dichtmittelzusammensetzung, enthaltend:
eine Basiszusammensetzung, die ein schwefelhaltiges Polymer enthält,
eine Härtungsmittelzusammensetzung, die ein Härtungsmittel enthält, und
einen elektrisch leitfähigen Füllstoff in mindestens einem von der Basiszusammensetzung oder der Härtungsmittelzusammensetzung, wobei der elektrisch leitfähige Füllstoff Kohlenstoffnanoröhren und leitfähigen Ruß enthält.

2. Dichtmittelzusammensetzung nach Anspruch 1, wobei der elektrisch leitfähige Füllstoff in der Basiszusammensetzung vorliegt.

3. Dichtmittelzusammensetzung nach Anspruch 1, wobei der elektrisch leitfähige Füllstoff in der Härtungsmittelzusammensetzung vorliegt.

4. Dichtmittelzusammensetzung nach Anspruch 1, worin der elektrisch leitfähige Füllstoff in sowohl der Härtungsmittelzusammensetzung als auch der Basiszusammensetzung vorliegt.

5. Dichtmittelzusammensetzung nach Anspruch 1, wobei die Dichtmittelzusammensetzung im Wesentlichen nickelfrei ist.

6. Dichtmittelzusammensetzung nach einem der Ansprüche 1 bis 5, wobei der leitfähige Ruß einen mittleren Teilchendurchmesser aufweist, der größer als der mittlere Teilchendurchmesser der Kohlenstoffnanoröhren ist.

7. Dichtmittelzusammensetzung nach einem der Ansprüche 1 bis 5, wobei die Kohlenstoffnanoröhren einen mittleren Teilchendurchmesser aufweisen, der größer als der mittlere Teilchendurchmesser des leitfähigen Rußes ist.

8. Dichtmittelzusammensetzung nach einem der Ansprüche 1 oder 5, wobei die Kohlenstoffnanoröhren eine Längendimension von 5 µm bis 30 µm und eine Durchmesserdimension von 10 nm bis 30 nm aufweisen.

9. Dichtmittelzusammensetzung nach einem der Ansprüche 1 oder 5, wobei der leitfähige Ruß eine mittlere Teilchengröße von 10 µm bis 40 µm aufweist.

10. Dichtmittelzusammensetzung nach einem der Ansprüche 1 oder 5, wobei das Volumenverhältnis der Kohlenstoffnanoröhren zu dem leitfähigen Ruß von 1:5 bis 1:10 reicht.

11. Dichtmittelzusammensetzung nach Anspruch 1, die ferner mindestens eines von einem Haftvermittler, einem Korrosionsinhibitor oder einem Weichmacher in mindestens einem von der Basiszusammensetzung oder der Härtungsmittelzusammensetzung enthält.

12. Dichtmittelzusammensetzung nach Anspruch 1, wobei das schwefelhaltige Polymer ein Polysulfid oder ein Polythioether ist.

## Revendications

1. Composition de matériau étanchéifiant, comprenant :
- une composition de base comprenant un polymère soufré,
- une composition d'agent durcisseur comprenant un agent durcisseur,
- et une charge électro-conductrice présente dans au moins l'une des composition de base et composition d'agent durcisseur, laquelle charge électro-conductrice comprend des nanotubes de carbone et un noir de carbone conducteur.

2. Composition de matériau étanchéifiant, conforme à la revendication 1, dans laquelle la charge électro-conductrice se trouve dans la composition de base.

3. Composition de matériau étanchéifiant, conforme à la revendication 1, dans laquelle la charge électro-conductrice se trouve dans la composition d'agent durcisseur.

4. Composition de matériau étanchéifiant, conforme à la revendication 1, dans laquelle la charge électro-conductrice se trouve dans les deux compositions, la composition de base et la composition d'agent durcisseur.

5. Composition de matériau étanchéifiant, conforme à la revendication 1, laquelle composition de matériau étanchéifiant ne contient pratiquement pas de nickel.

6. Composition de matériau étanchéifiant, conforme à l'une des revendications 1 ou 5, dans laquelle le diamètre moyen de particules du noir de carbone conducteur est plus grand que le diamètre moyen de particules des nanotubes de carbone.

7. Composition de matériau étanchéifiant, conforme à l'une des revendications 1 ou 5, dans laquelle le diamètre moyen de particules des nanotubes de carbone est plus grand que le diamètre moyen de particules du noir de carbone conducteur.

8. Composition de matériau étanchéifiant, conforme à l'une des revendications 1 ou 5, dans laquelle les nanotubes de carbone ont de 5 µm à 30 µm de longueur et de 10 nm à 30 nm de diamètre.

9. Composition de matériau étanchéifiant, conforme à l'une des revendications 1 ou 5, dans laquelle la taille moyenne de particules du noir de carbone conducteur vaut de 10 µm à 40 µm.

10. Composition de matériau étanchéifiant, conforme à l'une des revendications 1 ou 5, dans laquelle le rapport en volume des nanotubes de carbone au noir de carbone conducteur vaut de 1/5 à 1/10.

11. Composition de matériau étanchéifiant, conforme à la revendication 1, qui comprend en outre, dans au moins l'une des composition de base et composition d'agent durcisseur, au moins l'un des composants suivants : un promoteur d'adhérence, un inhibiteur de corrosion et un plastifiant.

12. Composition de matériau étanchéifiant, conforme à la revendication 1, dans laquelle le polymère soufré est un polysulfure ou un polythioéther.
